**Europäisches Patentamt**

(19) **European Patent Office**

**Office européen des brevets**

(11) Publication number : **0 388 469 B1**

(12) **EUROPEAN PATENT SPECIFICATION**

(45) Date of publication of patent specification :
27.01.93 Bulletin 93/04

(51) Int. Cl.⁵ : **B65D 65/40,** B65D 81/24, C08J 7/00

(21) Application number : **88908346.5**

(22) Date of filing : **21.09.88**

(86) International application number :
**PCT/JP88/00955**

(87) International publication number :
**WO 90/03318 05.04.90 Gazette 90/08**

(54) PACKAGING MATERIAL MADE OF ELECTRET MATERIAL AND PACKAGING METHOD.

(43) Date of publication of application :
26.09.90 Bulletin 90/39

(45) Publication of the grant of the patent :
27.01.93 Bulletin 93/04

(84) Designated Contracting States :
**AT BE CH DE FR GB IT LI LU NL SE**

(56) References cited :
JP-A- 4 910 738
JP-A- 5 440 793
JP-A-61 289 177
JP-B- 5 647 299
JP-B- 5 936 585
JP-U- 5 798 278
JP-Y- 4 736 553

(72) Inventor : ANDO, Katsutoshi
14-15, Ohira 2-chome Otsu-shi
Shiga-ken 520 (JP)
Inventor : OGAWA, Katsuya
13-1, Sonoyama 2-chome Otsu-shi
Shiga-ken 520 (JP)
Inventor : NISHIURA, Eiichi
263, Kamitanakami Hirano-cho Otsu-shi
Shiga-ken 520 (JP)
Inventor : OKUMURA, Yoshiharu
13-1, Sonoyama 2-chome Otsu-shi
Shiga-ken 520 (JP)
Inventor : II, Yoshikazu
13-1, Sonoyama 2-chome Otsu-shi
Shiga-ken 520 (JP)

(74) Representative : Miller, Joseph et al
J. MILLER & CO. 34 Bedford Row, Holborn
London WC1R 4JH (GB)

(73) Proprietor : **TORAY INDUSTRIES, INC.**
2-1, Nihonbashi Muromachi 2-chome Chuo-ku
Tokyo 103 (JP)

## Description

Technical Field:

The present invention relates to a packaging material and a packaging method and, more particularly, those for packaging an object so that its original freshness can be maintained intact for a long period of time.

Background Art:

To maintain the freshness of fresh vegetables, fruits and so forth, conventionally it has been of practice at supermarkets and grocery stores (grocer's shops) to package such fresh foodstuffs with resin films of such as a polyvinylidene chloride resin, a polyethylene resin and so forth. By this packaging with a resin film, a certain degree of advantageous results has been attained such that the evaporation of moisture of the merchandise can be suppressed and, at the same time, the merchandise can be prevented from becoming polluted with environmental pollutants to lower their commercial values.

However, the packaging with a resin film is not effective beyond that evaporation of moisture can be suppressed and that pollution can be prevented. It is not effective in inhibiting reproductive cells of germs and/or molds tending to propagate in packaged objects, so that relying on this packaging, it is impossible to prevent the growth of for example a mold in packaged objects when they are left standing for more than about a week after packaging. Also, while fresh foodstuffs such as fresh vegetables and fruits tend to grow dull in color or undergo a color change as time lapses, it has been impossible to effectively prevent such loss of or change in color according to the packaging with conventional resin films.

Thus, relying on the packaging with conventional resin films, there has been a limitation applied in maintaining an original freshness for an extended period of time and/or in preventing growth of molds.

Disclosure of the Invention:

An object of the present invention is to overcome: the above pointed out shortcomings and limitation involved in conventional packaging materials and packaging methods, and provide a packaging material and a packaging method which enable to maintain an original freshness for a prolonged period of time.

Another object of the invention is to provide a packaging material and a packaging method by which it is possible to maintain for a long period of time an original freshness of a variety of objects including not only fresh foodstuffs such as fresh vegetables and fruits but also sampled animal and plant specimens, not to permit packaged objects to get dull in color or undergo a color change and to inhibit propagation of reproductive cells of germs and molds.

The packaging material to attain the above objects according to the present invention is characterized by comprising an electret material including a surface portion having mutually oppositely polarized electric charges in its front surface and its back surface.

The packaging method according to the present invention is characterized by surrounding at least a part of an object to be packaged with the above packaging material.

A packaging material having a surface portion of which the front surface and the rear or back surface have differently polarized charges as above can produce an electric field around itself, and the electric field exerts an electrical stimulation on an object or a product packaged. with the material, whereby it is possible to maintain an original freshness of the packaged product and inhibit the propagation of germs, molds and so forth in the packaged product.

Brief Description of the Drawings:

Fig. 1 is a longitudinal sectional view, showing a portion of a packaging material comprising a resin film according to an embodiment of the present invention;

Fig. 2 is a longitudinal sectional view, showing a portion of a packaging material comprising a laminate of resin films according to another embodiment of the invention;

Fig. 3 is a longitudinal sectional view, showing a portion of a packaging material comprising a composite material composed of a resin film and a sheet-type carrier material, according to a still another embodiment of the present invention;

Fig. 4 is a longitudinal sectional view, showing a packaging material comprising a shaped resin moldate, according to a yet still another embodiment of the invention;

Fig, 5 shows a view, taken for illustration of the packaging method according to the invention, which is carried out with use of the packaging material according to the invention; and

Fig, 6 shows a type view of a measurement arrangement for finding the surface charge density of electret materials.

Best Mode for Carrying Out the Invention:

The electret material useful for the packaging material according to the present invention is required to include a surface portion having a front or top surface and a back or bottom surface which are imparted with mutually differently polarized electric charges.

In order for the electret material to have the above surface portion, the electret material may be any of the forms of sheet-type products having a flexibility such as films, non-woven fabrics, papers and knit or woven fabrics, and molded structural bodies or shaped resin moldates having a rigidity and any of the forms of such as a box, a cup, a dish and a bottle. That is to say, the surface portion may comprise any of a flat surface, a curved surface and a cubic surface. Particularly, sheet-type films are most advantageously useful, and normally they are processed to a bag-type product, into which an object to be packaged may be placed to possibly provide a sealed package.

Now that the electret material for use in or for the present invention is required to include a surface portion of which the front surface and the rear surface can be electrified respectively with a positively polarized charge and a negatively polarized charge, the material for the electret material should preferably be such a one as having an electric resistivity of at least $10^{13}\Omega\cdot$cm. For such material, resins are preferably useful, such as for example polyolefin resins, polyester resins, fluorine-containing resins, polyvinyl chlorides, polyamide resins and polyacrylic resins. Particularly, polyolefin resins such as polypropylene and polyethylene are preferably useful, and among all, polypropylene comes under an optimal material.

It is recommendable to incorporate into the above resin an effective additive for enhancing the surface charge density. For preferable additives, there may be named for example such as hindered phenol, hindered amine, an antioxidant such as a sulfur-based one, and metal salts of polar polymer fatty acids.

It is also advantageous to knead into the above resin a powder of inorganic substances such as Oya-ishi, (a kind of tuff) and porous ceramics as an effective additive for absoring ethylene gas and preserving the freshness.

For purposes of the present invention, the method for electrifying a resin material formed with a surface portion as described above, namely the method for electrifying the respective surfaces of the surface portion with polarized charges, is not particularly limited, and for this, employable is any of the known methods according to which the surface portion of the resin material is placed between a discharging electrode and a grounding electrode and a high voltage is impressed between the electrodes. For example, the electrification processes proposed by the inventors of the present invention in patent application Kokai publications No. 61-282471 and No. 61-289177 are useful as particularly preferable method.

The amount of electric charges to be imparted to the surface portion according to the present invention is prefer-ably to be such as to attain a surface charge density per surface of at least $1 \times 10^{-11}$ coulomb/cm$^2$ or, more preferably, at least $1 \times 10^{-10}$ coulomb/cm$^2$, or particularly preferably, at least $1 \times 10^{-9}$ coulomb/cm$^2$. When an electrification is made to provide a surface charge density as above, it is possible to let an electric field be generated around the electret material and realize an effective function for maintaining the freshness of a packaged product.

The above termed surface charge density is found by using a measurement system or arrangement as shown in Fig. 6 as follows. In Fig. 6, the reference numeral 10 denotes a grounded metal electrode made of brass, and the numeral 11 denotes a metal electrode also made of brass and having an area size of 100 cm$^2$, the latter metal electrode 11 being adapted to be movable towards up and down relative to the other metal electrode 10. A sample P (having an area size of 100 cm$^2$) of an electret material is placed between the metal electrodes 10 and 11, and the electric charge to be generated due to the electrostatic induction when the electrode 11 is upwardly moved from its closed position shown by solid lines to the open position shown by broken lines is measured in terms of voltage Y by a voltmeter 13 (a high performance electrometer, TR8562, a product of Takeda Riken K.K.) through a capacitor 12.

From the voltage V found as above, the surface charge density of the electret sample P is calculated according to the following calculation equation:

surface charge density (coulomb/cm$^2$) = C x V/S,

providing:

C = capacitance of the capacitor (farad);

Y = voltage (volt); and

S = area size of the sample (cm$^2$)

In an electret material made with use of a resin added with the above described additive so as to enhance the surface charge density and imparted with electric charges by the electrification process, the electric charges are polarized at a high degree of polarization orientation in a front surface region and a rear surface region in the electret material, which therefore are heteropolar. That is to say, if the front or top surface region bears a negative charge, then the rear or ,bottom surface region bears a positive charge. The electric charges in the electret material being dipoler polarized to the front and the rear surface regions as above, an electric field is formed around the electret material, and the electret material can exhibit its function as electret stably for a long period of time. In connection with the condition of polarization of electric charges, it is not always necessary that electric charges of a same polarity are distributed over a whole of a same surface region, and it may alternatively be made that surface portions having opposite polarities are present in part in the whole of a same surface region.

According to the present invention, the above described electret material is made a sheet-type product or a shaped resin moldate to provide various packaging materials. Among the various possible packaging materials, resin films come under an optimal packaging material in that they are so flexible or pliable that they can easily take to the shape of objects to be packaged, they are easy to handle and, in addition, they are possessed of a sealability.

In using a resin-film packaging material for packaging fresh foodstuffs which actively respire such as fresh vegetables and fruits, preferably it should be made to effect a completely sealed packaging. This is because if the packaging with the resin film is in an opened condition, the degree of the freshness of the packaged object tends to considerably lower as a result of transpiration accompanying to the respiration of the packaged object, giving rise to withering, decaying, drying and so forth of the object. However, if a completely sealed packaging is effected as above, this is likely to accompany the phenomenon that as a result of respiration of the packaged object, the concentration of carbon dioxide gas inside the pack tends to rise abnormally, while the concentration of oxygen inside the pack is lowered. That is to say, a problem is likely such that the packaged fresh product can no longer do a normal respiration and that transpired moisture becomes condensed to form dew to thereby permit propagation of microorganisms to become promoted.

Thus, the resin film for use for the packaging material for fresh products such as fresh vegetables and fruits should preferably have an appropriate extent of a selective permeability towards carbonic acid gas and oxygen. Whereas this gas permeability may vary depending on the kind or nature of products to be packaged, for fresh products such as fresh vegetables and fruits, the permeability of carbonic acid gas is preferably within a range of 500 to 350,000 $cc/m^2 \cdot 24$ hr·atm or, more preferably, 25,000 to 250,000 $cc/m^2 \cdot 24$ hr·atm, while the oxygen permeability is preferably within a range of 100 to 35,000 $cc/m^2 \cdot 24$ hr·atm or, more preferably, 3,000 to 30,000 $cc/m^2 \cdot 24$ hr·atm.

Also, to prevent moisture transpired from a packaged fresh product from becoming condensed to form dew on the inner surface of the packaging material comprising a resin film, the resin film should necessarily have a suitable moisture permeability, While this moisture permeability, too, may vary depending on the kind or nature of a product to be packaged, for fresh products such as fresh vegetables and fruits, the moisture permeability is preferably within a range of 5 to 700 $g/m^2 \cdot 24$ hr or, more preferably, 20 to 500 $g/m^2 \cdot 24$ hr. If this moisture permeability is lower than 5 $g/m^2 \cdot 24$ hr, then loss of or change in color of the packaged product is likely, while if it is higher than 700 $g/m^2 \cdot 24$ hr, such as withering, decaying and drying of the packaged product are likely, resulting in a considerable lowering of the freshness of the product.

Further, in packaging a product which undergoes a particularly large extent of transpiration of moisture among various fresh products, it is recommendable to use a packaging material appropriately formed with a number of openings so that formation of dew from the transpired moisture from such fresh product can be prevented.

Where an object to be packaged is meat such as butcher's meat, the oxygen permeability of the packaging material should preferably be lower than the above recited preferred range for fresh products. That is to say, the oxygen permeability the packaging material resin film should have in the present case is preferably within a range of 5 to 200 $cc/m^2 \cdot 24$ hr·atm or, more preferably, 20 to 100 $cc/m^2 \cdot 24$ hr·atm. If this oxygen permeability is lower than 5 $cc/m^2 \cdot 24$ hr·atm, the packaged product tends to undergo dulling of or change in color, while if it exceeds 200 $cc/m^2 \cdot 24$ hr·atm, then the product is liable to oxidation to permit the propagation of microorganisms to be promoted.

Further, the above recited permeability of carbonic acid gas, oxygen permeability and moisture permeability are according to the following prescriptions in JIS standards.

carbonic acid gas permeability: JIS Z 1707 method (20° C, 90 % RH);

oxygen permeability: JIS Z 1707 method (20° C, 90 % RH); and

moisture permeability: JIS Z 0208 method (40° C, 90 % HR)

Ultraviolet rays promote the change in color and oxidation of meat such as butcher's meat, so that resin films for use for the packaging of such a product should advisably be colored in reddish orange or be printed thereon so as to shut ultraviolet rays, or be made a composite body comprising a resin film itself and another sheet or film colored in reddish orange.

In the case of a packaging material comprising a resin film, its thickness should preferably be on the order of 4 to 300 μm or, more preferably, 6 to 100 μm or, particularly preferably, 10 to 50 μm so that this material can be applied to closely attach on an object to be packaged. If this thickness is less than 4 μm, the packaging material is prone to undergo tearing or ripping, while if it is greater than 300 μm, the packaging material tends to have such a low flexibility or pliability that it cannot show a desirable packing adaptability.

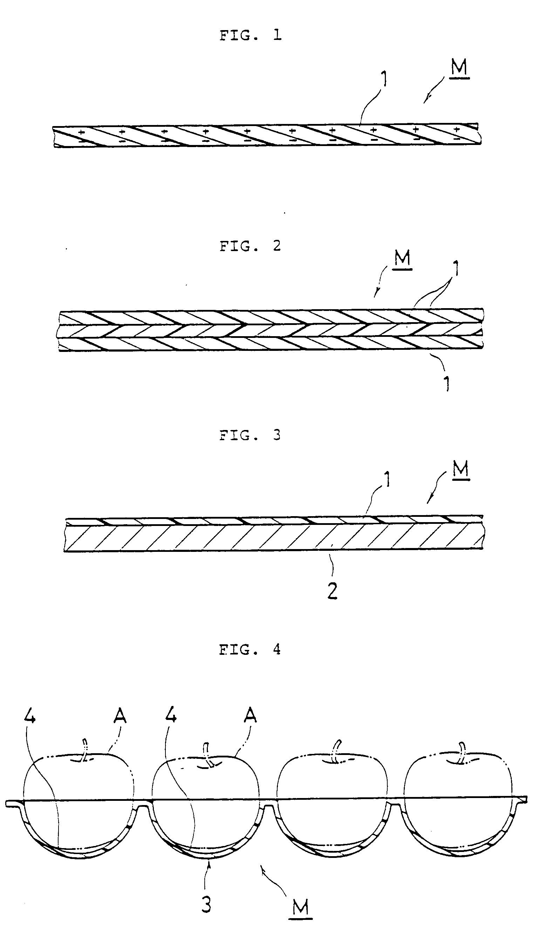

Fig. 1 shows an example of packaging materials M according to the present invention, which comprises a sheet-type resin film 1. This resin film 1 is electrified and has polarized electric charges in a front or top surface region and in a rear or bottom surface region such that while the front surface region bears positive charges, the rear surface region bears negative charges. In packaging a product with this packaging material M comprising the resin film 1, it may be operated to either enrobe the product directly with the material M or once process the material M to a bag-type device and then place the product into this bag-type device.

Also, the packaging may be made with use of a single ply of the resin film 1, or alternative to this, it may be made to laminate a plurality of the film 1 altogether as shown in Fig. 2 to provide a laminate packaging material and carry out the packaging with the laminate material. In providing a packaging material comprising a laminate structure as above, it should be made that while adjacent films in the laminate structure have a direction of polar orientation of polarized charges, the surface region bearing positive charges and the surface region bearing negative charges of a first film faces the corresponding respective surface regions of a second film. According to this lamination arrangement, it is possible to intensify the polarity of an outermost surface region to accordingly increase the intensity of an electric field being then formed, whereby it is possible to further prolong the preserved life of a packaged product. Also, it is possible to enhance or improve various characteristics of the packaging material relative to the environmental conditions such as the durability, the chemical resistance, the heat resistance and cold resistance.

In order not to impair the electret characteristics in laminating a plurality of the resin film altogether, it is recommended to bond the films to be mutually laminated using an adhesive agent or by a mechanical bonding, Alternatively, the lamination of films together may be carried out by an embossing process or by an ultrasonic welding, providing that the number of films to be laminated together should be appropriately limited so as not to impair the required permeability of carbonic acid gas, oxygen gas permeability and moisture permeability.

Also, as shown in Fig. 3, a packaging material comprising a resin film may be made a composite material by combining the resin film 1 of an electret material, with another sheet-type product 2 such as a non-woven fabric, a woven or knit fabric or a paper. The sheet-type product 2 for use for the making of a composite material may be either electrified or not, preparatively. In this connection, it is provided that the sheet-type product 2 for use here should not be such a one as being detrimental to the electrical activity of the resin film 1 comprising an electret material and also that the range of the thickness of the sheet-type product 2 should be carefully selected for use.

The packaging material M shown in Fig. 4 comprises a shaped resin moldate or a molded structural body 3. It does not have such a flexibility as had with films but has an appropriate degree of rigidity. Needless to mention, the molded structural body 3 comprises an electret material, and in its front surface region and its back surface region, it has polarized positive charges and polarized negative charges respectively. The shaped resin moldate or resin molded body 3 is so formed as to have a number of cup-shaped recesses 4 each for therein receiving a product to be packaged A which may be any of such as apples and citrus fruits such as oranges. In the present embodiment of the invention, the electret material is so made as to cover not a whole but only a part of the periphery of the product A.

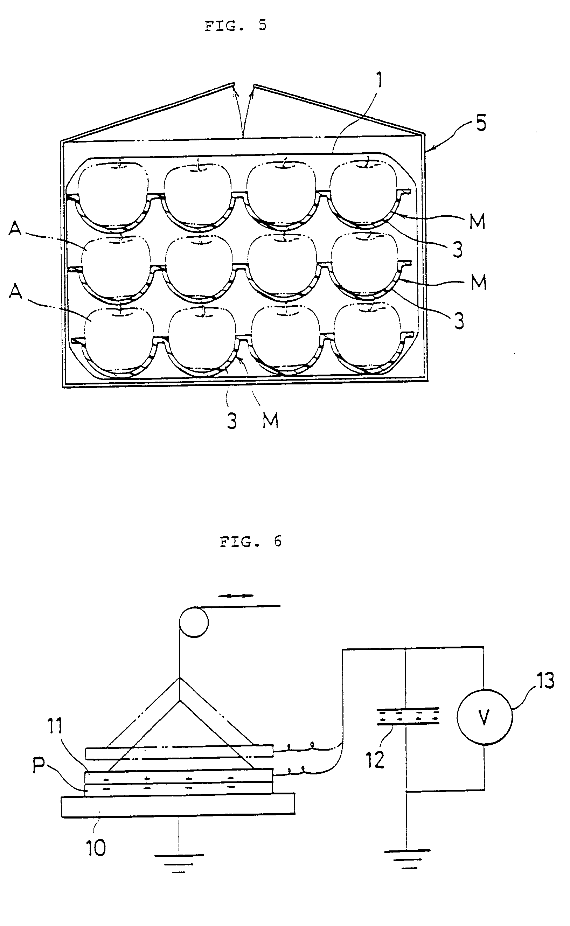

A plurality of shaped resin moldates 3 in which products such as apples or citrus fruits are placed in the number of recesses 4 may be received in a cardboard box 5 and therein stacked one on the other for example as shown in Fig. 5. If necessary, further, it may be operated to externally cover a whole of the stacked assembly of molded structural bodies 3 with a resin film 1 comprising an electret material or to apply the resin film 1 between adjacent stacked molded structural bodies or shaped resin moldates 3.

The structure of the molded structural body 3 having a rigidity is not limited to the above described cup-shaped one, and it may comprise any of optional shapes in accordance with the particular shape of the product or object to be packaged such as a box shape, a dish shape and a bottle shape.

In packaging an object with a packaging material according to the invention as above, it is not always necessary to cover a whole of the object, and in lieu thereof, the packaging may well be made in a manner of covering only a part of the object, depending on the object to be packaged. When an object is covered with the packaging material, an electrical stimulation produced in the electric field generated by the electret material acts to suppress lowering of the freshness of the covered object and/or to inhibit the growth of microorganisms such as mold on or in the object. In covering an object with the packaging material as above, the packaging material may be applied with either of its two surfaces bearing electric charges of respective polarities disposed to face the object. According to results of tests conducted by the inventors of the present invention, however, it was ascertained that negative charges exbibit higher effect of maintaining or preserving the freshness of the packaged object.

Also, this effect of maintenance or preservation of freshness is higher as the electric field generated by the electret material is more intense, and this tendency appears particularly conspicuously where the object to be packaged is a plant.

Moreover, if the air tending to remain present between the surface of a packaged object and the packaging material is removed, the effect of preservation can be enhanced in that it then is possible to inhibit or suppress the propagation of reproductive cells of germs and molds. This effect can be increasingly enhanced by raising the degree of vacuum attained.

The above described packaging material according to the present invention can be utilized not only in the cases of packaging for preservation of fresh natural foodstuffs such as fresh vegetables and fruits but also broadly in all such other cases where it is desired to preserve an object for a long period of time without permitting an original state of the object to change, for example in the packaging for preservation of fresh products such as decorative cut flowers and meat, and sampled animal and plant specimens.

Example 1:

Using an electret material comprising a 10 μm-thick polypropylene film (additive: 800 ppm of hindered phenol) having a surface charge density on the front surface and a surface charge density on the rear surface of 3 x $10^{-9}$ coulomb/$cm^2$ of positive polarity and 2.7 x $10^{-9}$ coulomb/$cm^2$ of negative polarity respectively, a carbonic acid gas permeability of 45,000 cc/$m^2$·24 hr·atm, an oxygen permeability of 12,500 cc/$m^2$·24 hr·atm, and a moisture permeability of 35 g/$m^2$·24 hr, potatoes were packaged.

Packaging was made in two different ways, in one of which the film surface carrying the positive polarity was disposed to face the potato and in the other of which the film surface carrying the negative polarity was disposed to face the potato, and a comparative evaluation of the effect of preservation was made between the two different ways of packaging. Five potatoes were packaged according to each of the two ways of packaging.

By way of comparison, further, 5 potatoes were packaged in same manners as above with a same polypropylene film as above but not made an electret (the surface charge density was below the determinable limit and could not be measured), and an evaluation of the effect of freshness preservation was conducted.

The packaged test samples were left still in an atmosphere of a room temperature of 25 to 35° C and a humidity of 65 to 85 % and visual inspections were carried out. After the lapse of a 1-month time after the initiation of the test, it was found that a white mold was propagating on the comparative test samples (packaged with the polypropylene film not made an electret material).

In contrast to the above, on or in the test samples packaged with the electret material in each of the above described two ways of packaging, no growth of mold was observed even after the lapse of a 2-month test period, nor the samples underwent a withering, and a remarkable effect of the freshness preservation was ascertained.

Example 2:

Using the same electret material as in the above Example 1, a chrysanthemum was packaged in a manner such that while the flower portion alone was covered with the electret material, which was disposed with its negative polarity surface facing the flower, the stem was kept immersed in water for preservation.

Also, by way of control, a same packaging as above was made using a same polypropylene film as above but not made an electret (the surface charge density was below the determinable limit and could not be measured).

One week after the initiation of the test, the condition of each of the two above prepared test samples was visually inspected. The test sample the flower portion of which was packaged with the electret material was found to have undergone no loss or dulling of, or change in, color nor a withering, and the original freshness of the flower was effectively maintained. However, the flower portion of the control sample (covered with the polypropylene film which was not made an electret) was found to have grown yellowish, loosing the original color, and have been withered.

Example 3:

Using an electret material comprising a 12 μm-thick polypropylene film having a surface charge density of electric charges imparted on the front surface and a surface charge density on the rear surface respectively of 9 x $10^{-9}$ coulombs/$cm^2$ of positive polarity and of 1 x $10^{-8}$ coulombs/$cm^2$ of negative polarity, a carbonic acid gas permeability of 30,000 to 40,000 cc/$m^2$·24 hr·atm, an oxygen permeability of 7,200 to 11,800 cc/$m^2$·24 hr·atm, and a moisture permeability of 27 to 29 g/$m^2$·24 hr, a 2-ply laminate was prepared by lamnating two of the above film together with the directions of their electric fields arranged to be the same.

Using the above prepared polypropylene film laminate as packaging material, tangerines (citrus unshiu) were packaged in a completely sealed manner with the negative polarity surface of the laminate closely contacted with the surface of the tangerines, and the packaged test samples were left still in a room of a temperature of 20° C ± 2° C and a humidity of 65 % ± 2 %.

Test samples were prepared in the number of 20, and by visually inspecting the decaying conditions of the test samples with the lapse of days, a preservation efficiency rate K was determined according to the following equation.

$$\text{preservation efficiency rate K (\%)} = \frac{N - n}{N} \times 100$$

N : the number of test samples; and

n : the number of test samples which underwent a damage such as decay, mold propagation and/or drying

As a result of the above test, the preservation efficiency rates found were 100 % after the lapse of a one-month test period and 70 % after the lapse of a two-month test period. Also, it was found that most of the test samples did not impair their original appearance and that a highly remarakble effect of preservation was attained.

Comparative Example 1:

Using polypropylene films having a thickness, a permeability of carbonic acid gas, an oxygen permeability and a moisture permeability which were all same as those of the film used in the above Example 3, which films were however not made an electret, a 2-ply laminate was prepared.

Then, using the above prepared laminate as packaging material, packaging of tangerines were made, and under the same conditions as in Example 3 with respect to such as the number of samples and the manner in which the test samples were left still, a same test as in Example 3 was conducted.

As a result of the test, it was found that the effect of preservation attained was very poor such that the preservation efficiency rates were 60 % after the lapse of a one-month test period and 5 % after the lapse of a two-month time after the initiation of the test.

Comparative Example 2:

Using a 2-ply laminate of a commercially obtained polyvinylidene chloride film of 10 μm in thickness, having a permeability of carbonic acid gas of 72 to 105 cc/m$^2$·24·hr·atm, an oxygen permeability of 32 to 40 cc/m$^2$·24 hr·atm and a moisture permeability of 2 to 2.5 g/m$^2$·24 hr, a same completely sealed packaging of tangerines as in Example 3 was made with the above laminate as the packaging material, and a same preservation test as in Example 3 was conducted under the same conditions as in Example 3 with respect to such as the number of test samples and the manner in which the test samples were left still.

As a result of the test, it was found that the preservation efficiency rates were 30 % after the lapse of a one-month time and 0 % after the lapse of a two-month time after the initiation of the test, when all test samples were rotted and completely lost their original configurations.

Comparative Example 3:

Using a 2-ply laminate prepared of a polyethylene film which was not made an electret and which had a same thickness as the film used in Example 3, a carbonic acid gas permeability of 28,000 to 36,000 cc/cm$^2$·24 hr·atm, an oxygen permeability of 9,000 to 10,000 cc/cm$^2$·24 hr·atm and a moisture permeability of 29 to 31 g/m$^2$·24 hr, a same completely sealed packaging of tangerines as in Example 3 was made with the present laminate packaging material, and a same preservation test as in Example 3 was conducted under the same conditions as in Example 3 with respect to the number of test samples and the manner in which the test samples were left still.

As a result of the test, it was found that the preservation efficiency rates were 10 % after the lapse of a one-month test period and 0 % after the lapse of a two-month test period, when all test samples were decayed and underwent a growth of a mold.

Comparative Example 4:

Under the same conditions as in Example 3 with respect to the number of test samples and the manner in which the test samples were left still, a same preservation test as in Example 3 was operated of same tangerines as in Example 3, except that the tangerines were not packaged with any resin film but were left in an uncovered or a naked state.

As a result of this test, it was found that the preservation efficiency rates were 10 % after the lapse of a one-month test period and 0 % after the lapse of a two-month test period, when all test samples were dried and underwent contraction with the freshness completely lost.

Example 4:

Using as packaging material a 24 μm-thick polypropylene film which had a surface charge density of electric charges imparted on the front surface and a surface charge density on the rear surface of 9 x 10$^{-9}$ coulomb/cm$^2$ of positive charges and 9 x 10$^{-9}$ coulomb/cm$^2$ of negative charges respectively, a carbonic acid gas permeability of 13,000 to 20,000 cc/m$^2$·24 hr·atm, an oxygen permeability of 3,400 to 6,000 cc/m$^2$·24 hr·atm, and a moisture permeability of 14 to 16 g/m$^2$·24 hr, a number of completely sealed packaged test samples of sampled clover specimens was prepared by placing the clover between two films which were put one above the other in a manner'such that the negative polarity surfaces of respective films face each other, and by melt-cutting the laminate of the piled films by a heat cutter at its peripheral portion 5 cm distant from the location of the clover specimen so that venting could not take place into and out of the packaged samples.

Then, the test samples were left still in a room having a room temperature of 20° C ± 2° C and a humidity of 65 % ± 2 % to carry out a test to find dulling of and/or change in the color of the clover.

As a result of the test, it was found after the lapse of a two-month test period that although the leaves of clover underwent a more or less contraction, their color did not undergo a dulling or change and they remained to be in their original dark green color. No sprout or growth of a mold was observed, either.

Comparative Example 5:

Using as packaging material a polypropylene film which had a same thickness as the film used in the above Example 4 and was also identical with the film in Example 4 with respect to each of the carbonic acid gas permeability, the oxygen permeability and the moisture permeability but which was not made an electret, a number of completely sealed packaged test samples were prepared by interposing sampled clover specimens between two of the above film in same manners as in Example 4 and by melt-cutting the laminate of films by a heat cutter at its peripheral portion 5 cm distant from the location of the clover so that no venting could take place into and out of the test samples, Under the same conditions as in Example 4 with respect to the number of test samples and the manner in which the test samples were left still, a same preservation test as in Example 4 was carried out.

As a result of the test, it was found that after the lapse of a three-week test period, most of the test samples underwent dulling of the color of the leaves of the clover and that by the end of a one-month test period, all clover specimens underwent a color change into brown. Also, after the lapse of a one-month test period, the growth of a mold was observed in connection with 40 % of the test samples.

Comparative Example 6:

Using as packaging material a commercially obtained polyvinylidene chloride film of 10 μm in thickness, having a carbonic acid gas permeability of 72 to 105 cc/m²·24 hr·atm, an oxygen permeability of 32 to 40 cc/m²·24 hr·atm and a moisture permeability of 2 to 2.5 g/m²·24 hr, a number of completely sealed packaged test samples of sampled clover specimens was prepared by interposing the clover specimens between two of the above film in same manners as in Example 4 and by melt-cutting the laminate of films by a heat-cutter at its peripheral portion 5 cm distant from the location of the clover specimens so that no venting could take place into and out of the test samples, Then, under the same conditions as in Example 4 with respect to all of the number of test samples and the condition in which the test samples were left still, a same preservation test as in Example 4 was carried out.

As a result of the test, it was found that after the lapse of a two-week test period, most of the test samples underwent dulling of the color of the leaves of the clover and that after the lapse of a three-week test period, all clover specimens underwent a color change into brown, same as in the above Comparative Example 5. Also, after the lapse of a one-month test period, it was confirmed that the growth of a mold had taken place in connection with all or 100 % of the test samples.

Comparative Example 7:

Using as packaging material a polyethylene film which had a same thickness as the film used in Example 4, a carbonic acid gas permeability of 12,000 to 19,000 cc/m²·24 hr·atm, an oxygen permeability of 4,000 to 5,000 cc/m²·24 hr·atm and a moisture permeability of 15 to 17 g/m²·24 hr but which was not made an electret, a number of completely sealed packaged test samples of sampled clover specimens was prepared by interposing clover specimens between two of the above film in same manners as in Example 4 and by melt-cutting the laminate of the films by a heat-cutter at its peripheral portion 5 cm distant from the location of the clover specimens so that no venting could take place into and out of the test samples. Then, a same preservation test as in Example 4 was operated under the same conditions as in Example 4 with respect to all of the number of test samples and the condition in which the test samples were left still.

As a result of the test, it was found that after the lapse of a two-week test period, most of the test samples underwent a dulling of the color of the leaves of the clover and that after the lapse of a three-week test period, 50 % of the clover specimens underwent a color change into yellow, while 35 % of the specimens changed the color into yellowish brown. Also, 15 % of the clover specimens changed the color into brown, and the rate of specimens which remained to be green was only 5 %. After the lapse of a one-month test period, a mold generation was observed in connection with 25 % of the test samples.

Further, same comparative preservation tests as above were carried out also in connection with such as cucumbers, cabbages and spinaches for the class of fresh vegetables, apples for the class of fresh fruits, and the flowers, stems and leaves of such as marguerites and chrysanthemums for the class of flowering plants and cut flowers sold at flower stands or florists.

The results of the above tests showed that although there is a variation in the number of days during which a decay takes place depending on a difference in the kind of objects to be packaged, in each instance of the tests the packaging with use of the packaging material according to the present invention brings about an exceeding result of preservation in comparison with the packaging with other packaging materials.

As described above, the packaging material according to the present invention can bring about an effect of suppressing or lowering the decay of the freshness and inhibiting propagation of reproductive cells of germs and molds attributable to the activity of an electric stimulation from an electric field generated by the electret material, whereby this packaging material can preserve the objects or products packaged therewith in their original state or condition for a long period of time. Also, the packaging material of the invention can suppress dulling of, or other change in, the color of packaged products and can maintain their attractive appearances intact for a long period of time.

## Claims

1. A packaging material comprising an electret material having a surface part carrying mutually oppositely polarized electric charge on the front surface and the rear surface thereof.

2. A packaging material as claimed in claim 1, which has a surface charge density on its each surface of at least 1 x $10^{-11}$ coulomb/cm$^2$.

3. A packaging material as claimed in claim 1 or 2, wherein the electret material comprises a sheet-type product made of a resin material selected from the group consisting of films, non-woven fabrics, papers and knit or woven fabrics.

4. A packaging material as claimed in claim 1 or 2, wherein the electret material comprises a shaped resin moldate.

5. A packaging material as claimed in claim 3, wherein the resin is selected from the group consisting of polyolefin resins, polyester resins, fluorine-containing resins, polyvinyl chloride resins, polyamide resins and polyacrylic resins.

6. A packaging material as claimed in claim 4, wherein the resin is selected from the group consisting of polyolefin resins, polyester resins, fluorine-containing resins, polyvinyl chloride resins, polyamide resins and polyacrylic resins.

7. A packaging material as claimed in claim 3, wherein the electret material comprises a resin film, which has a permeability of carbonic acid gas of 500 to 350,000 cc/m$^2$·24 hr·atm and an oxygen permeability of 100 to 35,000 cc/m$^2$·24 hr·atm, the packaging material being used for packaging fresh products.

8. A packaging material as claimed in claim 7, wherein the electret material comprises a resin film, which has a moisture permeability of 5 to 700 g/m$^2$·24 hr·atm, the packaging material being used for packaging fresh products.

9. A packaging material as claimed in claim 3, wherein the electret material comprises a resin film, which has an oxygen permeability of 5 to 200 cc/m$^2$·24 hr·atm, the packaging material being used for packaging butcher's meat.

10. A packaging material as claimed in claim 3, wherein the electret material comprises a resin film, which is formed with a number of openings, the packaging material being used for packaging fresh products.

11. A method of packaging comprising covering at least a portion of an object with an electret material having a surface part carrying mutually oppositely polarized electric charges on the front surface and the rear surface thereof.

12. A method as claimed in claim 11, wherein the object is a fresh product.

## Patentansprüche

1. Verpackungsmaterial mit einem Elektretmaterial mit einem Oberflächenteil, der wechselseitig entgegengesetzt polarisierte elektrische Ladungen auf seiner vorderen Oberfläche und seiner hinteren Oberfläche trägt.

2. Verpackungsmaterial nach Anspruch 1, das eine Oberflächeniadungsdichte auf jeder seiner Oberflächen von wenigstens 1 x $10^{-11}$ Coulomb/cm$^2$ hat.

3. Verpackungsmaterial nach Anspruch 1 oder 2, bei dem das Elektretmaterial ein Bogenprodukt aus einem Harzmaterial aus der Gruppe der Folien, nichtgewebten Vliese, Papiere und gewirkten oder gewebten Stoffe umfaßt.

4. Verpackungsmaterial nach Anspruch 1 oder 2, bei dem das Elektretmaterial einen geformten Harzformling umfaßt.

5. Verpackungsmaterial nach Anspruch 3, bei dem das Harz aus der Gruppe der Polyolefinharze, Polyesterharze, fluorhaltigen Harze, Polyvinylchloridharze, Polyamidharze und Polyacrylharze ausgewählt ist.

6. Verpackungsmaterial nach Anspruch 4, bei dem das Harz aus der Gruppe der Polyolefinharze, Polyesterhaze, fluorhaltigen Harze, Polyvinylchloridharze, Polyamidharze und Polyacrylharze ausgewählt ist.

7. Verpackungsmaterial nach Anspruch 3, bei dem das Elektretmaterial eine Harzfolie umfaßt, die eine Durchlässigkeit für Kohlensäuregas von 500 bis 350 000 cm$^3$/m$^2$. 24 h . atm und eine Sauerstoffdurchlässigkeit von 100 bis 35 000 cm$^3$/m$^2$ . 24 . h . atm hat, wobei das Verpackungsmaterial zur Verpackung frischer Produkte verwendet wird.

8. Verpackungsmaterial nach Anspruch 7, bei dem das Elektretmaterial eine Harzfolie umfaßt, die eine Feuchtigkeitsdurchlässigkeit von 5 bis 700 g/m$^2$ . 24 h . atm hat, wobei das Verpackungsmaterial zur Verpackung frischer Produkte verwendet wird.

9. Verpackungsmaterial nach Anspruch 3, bei dem das Elektretmaterial eine Harzfolie umfaßt, die eine Sauerstoffdurchlässigkeit von 5 bis 200 cm³/m² . 24 h . atm hat, wobei das Verpackungsmaterial zur Verpackung von Metzgereifleisch verwendet wird.

10. Verpackungsmaterial nach Anspruch 3, bei dem das Elektretmaterial eine Harzfolie umfaßt, die mit einer Anzahl von Öffnungen versehen ist, wobei das Verpackungsmaterial zur Verpackung frischer Produkte verwendet wird.

11. Verfahren zum Verpacken, bei dem man wenigstens einen Teil eines Gegenstandes mit einem Elektretmaterial mit einem Oberflächenteil bedeckt, der wechsiseitig entgegengesetzt polarisierte elektrische Ladungen auf seiner vorderen Oberfläche und seiner hinteren Oberfläche trägt.

12. Verfahren nach Anspruch 11, bei dem der Gegenstand ein frisches Produkt ist.

**Revendications**

1. Matière d'emballage comprenant une matière de type électret dont une partie de surface porte des charges électriques polarisées de façon mutuellement opposée sur sa face avant et sa face arrière.

2. Matière d'emballage suivant la revendication 1, qui a une densité de charge superficielle d'au moins 1 x 10⁻¹¹ coulomb/cm² sur chacune de ses faces.

3. Matière d'emballage suivant la revendication 1 ou 2, dans laquelle la matière d'électret est une matière en feuille constituée d'une résine, choisie dans le groupe des films, toiles non-tissées, papiers et tissus tricotés ou tissés.

4. Matière d'emballage suivant la revendication 1 ou 2, dans laquelle la matière d'électret constitue un moulage de résine profilé.

5. Matière d'emballage suivant la revendication 3, dans laquelle la résine est choisie dans le groupe comprenant des résines de type polyoléfine, des résines de type polyester, des résines fluorées, des résines de type chlorure de polyvinyle, des résines de type polyamide et des résines polyacryliques.

6. Matière d'emballage suivant la revendication 4, dans laquelle la résine est choisie dans le groupe comprenant des résines de type polyoléfine, des résines de type polyester, des résines fluorées, des résines de type chlorure de polyvinyle, des résines de type polyamide et des résines polyacryliques.

7. Matière d'emballage suivant la revendication 3, dans laquelle la matière d'électret comprend un film de résine qui a une perméabilité au gaz carbonique de 500 à 350 000 cm³/m².24 h.100 kPa et une perméabilité à l'oxygène de 100 à 35 000 cm³/m².24 h.100 kPa, la matière d'emballage étant utilisée pour emballer des produits frais.

8. Matière d'emballage suivant la revendication 7, dans laquelle la matière d'électret comprend un film de résine qui a une perméabilité à l'humidité de 5 à 700 g/m².24 h.100 kPa, la matière d'emballage étant utilisée pour emballage de produits frais.

9. Matière d' emballage suivant la revendication 3, dans laquelle la matière d'électret comprend un film de résine qui a une perméabilité à l'oxygène de 5 à 200 cm³/m².24 h.100 kPa, la matière d'emballage étant utilisée pour emballer de la viande de boucherie.

10. Matière d' emballage suivant la revendication 3, dans laquelle la matière d'électret comprend un film de résine qui comporte une pluralité de trous, la matière d'emballage étant utilisée pour emballer des produits frais.

11. Méthode d'emballage comprenant la couverture d'au moins une partie d'un objet avec une matière d'électret dont une partie de surface porte des charges électriques polarisées de façon mutuellement opposées sur sa face avant et sa face arrière.

12. Méthode suivant la revendication 11, dans laquelle l'objet est un produit frais.

FIG. 1

FIG. 2

FIG. 3

FIG. 4

FIG. 5

FIG. 6